Europäisches Patentamt

European Patent Office    (11) Publication number:    **0 394 172**

Office européen des brevets    **A2**

(19)

(12)    **EUROPEAN PATENT APPLICATION**

(21) Application number: 90480055.4    (51) Int. Cl.⁵: **G06F 15/40**

(22) Date of filing: 27.03.90

(30) Priority: 21.04.89 US 341512

(43) Date of publication of application:
24.10.90 Bulletin 90/43

(84) Designated Contracting States:
**DE FR GB**

(71) Applicant: **International Business Machines
Corporation
Old Orchard Road
Armonk, N.Y. 10504(US)**

(72) Inventor: **Ashfield, James Currie
8612 Woodlawn Dr.
Raleigh, NC 27613(US)**

Inventor: **Ballard, Christopher Paul
Via Odoardo Beccari 6
I-00154 Rome(IT)**
Inventor: **Cybrynski, Donna Beatty
710 Trappers Run Dr.
Cary, NC 27513(US)**
Inventor: **Heldke, Barbara Jill
10F Dutch Village
Kingston, NY 12401(US)**

(74) Representative: **Bonneau, Gérard
Compagnie IBM France Département de
Propriété Intellectuelle
F-06610 La Gaude(FR)**

(54) **Method of performing file services given partial file names.**

(57) The invention is used in a data communication network where files are identified by multi-token names and permits file services (fetching, replacing, deleting) to be performed in the network even where a user does not specify a network-unique or global name in the file service request and where the user is not present at the time the request is actually processed. Each global name catalogued in the network has a set of attributes, which are stored with the name. The attributes (MUST MATCH, NEED NOT MATCH, ORDERED, UNORDERED) define the structure of the global name and are assigned to token positions. When entering a file service request, the user enters at least part of the global name along with a set of indicators (FIND, IGNORE, SELECT HIGH, SELECT LOW) which specify operations to be performed with respect to certain token positions when comparing the file name in the service request with catalogued global names. The SELECT indicators are used to choose a single data object if the multiple data objects remain after the FIND and IGNORE indicators have been processed.

**FIG. 3**

## METHOD OF PERFORMING FILE SERVICES GIVEN PARTIAL FILE NAMES

The present invention relates to data processing networks and more particularly to a method of performing file services where a file service request may or may not include a complete file name.

Large data processing networks have many users sharing many files, copies of which may be stored at locations scattered throughout a country, region or even the world. In such networks, a user who requests a file service, such as the fetching, replacing or deleting of a file, is often not present when or where the file service request is processed by the various computer systems involved. This is especially true when the request is to move copies of a file from one location to another. In that situation, the user who issues the file service request may be at one location, called a requester location. The file to be moved may be at another location, called a source location. The user may wish to have the file sent to one or more target locations. The target locations may, but need not, include the requester location.

If the request is not urgent and is transmitted through the network with low priority, the complete file movement process may take a long time. The computer system at the source location must be able to uniquely identify the file that the user wants moved. If the file in question exists in several versions, the correct version must be selected. At each target location, there may already be several versions of the file. If an existing version is to be overwritten, the target system must assure that the correct existing version is being overwritten by the incoming version. The decisions made by the source and target systems must be independent of the presence of the user, who may be sound asleep on the other side of the world when those decisions actually have to be made.

The problem of performing file services without the active involvement of the requesting user is exacerbated by file naming conventions employed in large networks. Typically, data processing operating systems were developed on an assumption that each system would operate independently, with total control over all its resources. Traditionally, each system controlled the names of its files and would insure only that names were unique within the system. For example, at system A a name such as FILE1 would refer to one and only one data file. At system B, however, the name FILE1 could refer to a completely different data file. This approach is termed local, or location-dependent, naming.

A requester wishing to send a file to a particular system, called a target system, was required to identify the filed according to the file naming rules applied at the target system. If different file naming rules were in effect at the source and target systems, the requester had to create a new name for the file that conformed to the naming convention established for the target system. Moreover, the requester had to make sure that the new name did not conflict with the name of any existing file already stored at the target system.

When copies of files are sent to other systems, there is often a need to maintain records at a source system of what files are stored at what other locations. Alternatively, a user at a source system may need to query a target system to determine what files reside there. With purely local naming, even files with identical subject matter can have a different name at every system at which those files are stored. For multi-system networks of even modest size, purely local naming results in unacceptable complexity.

The alternative to local naming is global naming. In large networks, file names are designated using multi-token global names. Such names consist of a string of alphanumeric tokens separated from each other by delimiters such as spaces or periods. The higher order tokens qualify the lower order tokens. The assignment of token values is administered by a corresponding hierarchy of naming authorities so that each file name is unique in the entire network. The multi-token naming approach is useful in that each file has a unique name. Moreover, this approach allows the naming authorities to structure different parts of the name tree to conform to the particular needs of various groups of file users. Although the approach of using concatenated tokens permits considerable flexibility in the naming of files, it can also result in complex, dissimilar names. Assigned names may have different numbers of tokens. Some names may include version numbers. Others may include dates. Some parts of a name may be critical while others simply provide supplementary information.

Conventionally, a requester generally must know the correct value for every token in the global name before a file service can be successfully performed. If a user of a conventional system does not know the value of each token, he may attempt to locate or fully identify the right file by performing a "wild card" search of the directories or catalogs in which the file may be listed. Some operating systems allow a requester to supply only part of a name in a search request by specifying a special wild card character for the missing parts. In all-known systems, the wild card may take the form of an *. Searches performed in such systems require the active involvement of the user since the wild card search may turn up a number of files satisfying the search statement. The user of such a system is expected to make the final selection of a file from a displayed list.

Systems which employ wild card searching to locate files are not designed to reliably find one and only one file that matches the search request. Thus, a searcher could not ship a request to a remote system specifying a partial name and using a wild card character with any confidence that the target system would find one and only one file.

There is a need to provide a way for a computer system to determine which file to fetch, create, or delete, without requiring that the user be present at the time or place the determination is made and without necessarily requiring that the user specify the complete file name. The present invention is a technique that supports a wide variety of file name structures while still allowing a computer system to uniquely identify a single file even where a user specifies only part of the file name in a file service request.

The invention may take the form of a method to be practiced in a data processing network wherein files are identified by global names consisting of concatenated tokens. Each file identified by a complete global name is considered a unique data object. The network must include at least one node having a catalog of data objects which are candidates for involvement in a file service request entered into the network. Each data object is identified by a catalogued global name. The method permits file service requests to be performed where the file service request includes at least a partial requested file (RF) name. Each data object global name is stored in the catalog along with one or more attributes for each token position in the name. Each attribute indicates a property of the token in the global name. In the file service request, an indicator is assigned to each token position in the RF name at the time the request is generated. Each of the indicators defines a particular operation that is to be performed when an RF name token in the token position is being evaluated relative to a corresponding token in a catalogued global name. The RF name is analyzed relative to one or more catalogued global names on a token-by-token basis. A candidate data object is selected from the catalog when the tokens in that candidate data object satisfy the applicable indicators and attributes. The requested file service is performed with the selected data object.

Details of a preferred embodiment of the invention will be more readily ascertained from the following technical description when read in conjunction with the accompanying drawings wherein:

Figure 1 illustrates the form of a catalogued global name of a data object;

Figure 2 represents the form of a requested file (RF) name as it would appear in a file service request:

Figure 3 is a simplified flow chart of steps performed in generating global names;

Figure 4 is a flow chart of steps performed in processing a file service request in accordance with the present invention; and

Figure 5 is a representation of a file replace instruction executed in accordance with the present invention.

The present invention assumes that any data object (separate collection of data) can be uniquely identified by a network-unique global name composed of a string of tokens.

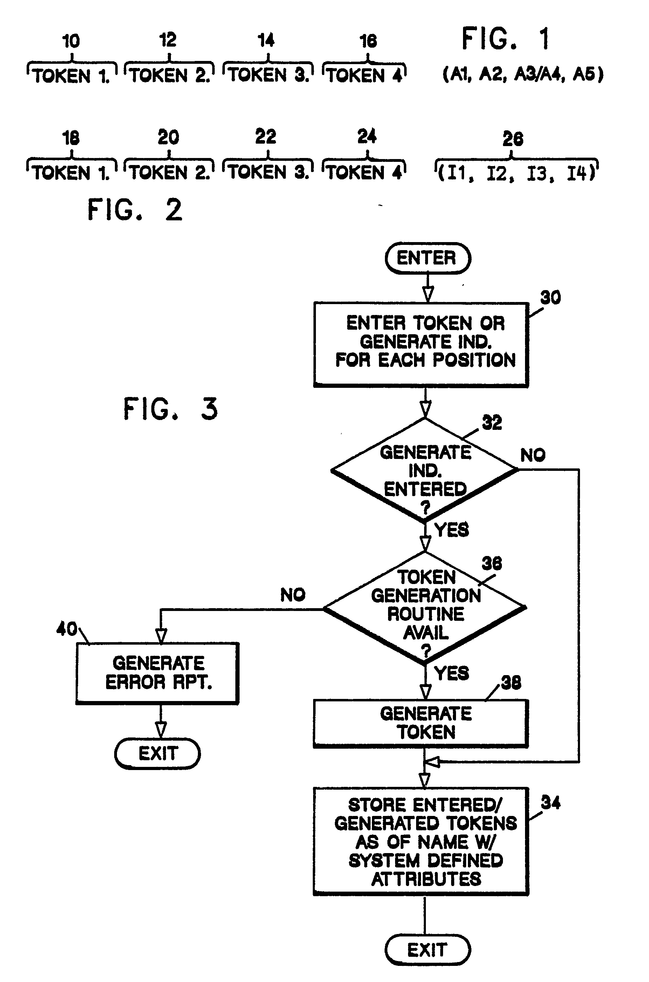

Referring to Figure 1, a global name is represented by concatenated tokens 10, 12, 14 and 16 separated from one another by periods. The periods act as delimiters to designate the beginning and end of a particular token. In accordance with the present invention, one or more attributes is associated with each token position in a global name. The attributes define a characteristic or property applicable to a specific token position. Attributes are used in processing file service requests. In the figure, attributes A1, A2 and A5 are associated with tokens 10, 12 and 16 respectively. Two attributes (A3 and A4) are associated with token 14 in the third token position. The attributes define the structure of the global name, are stored with the global name in any catalog and must accompany a new data object when it is received at a location for inclusion in an existing catalog.

Conceptually, a data object is a named entity that cannot be updated or changed in any way. If the smallest change is made to the byte stream constituting a data object, it is no longer the same data object and cannot be identified by the same global name. The slightest change to what was one data object creates a new and different data object that requires a new and different name. However, the difference in names may be very small. For example, when a byte stream is edited and then saved, most systems capture the date and time at which the byte stream was saved and store the date/time information with the name used to identify the byte stream. Conventionally, the date/time information is not considered part of the name.

In accordance with the present invention, any date/time information is considered part of the global name used to uniquely identify a byte stream or data object. A freshly stored version resulting from editing is considered a new data object with a different global name because the date and time values are updated relative to those in the original global name. This precise definition of a data object insures that all copies of a data object identified by a global name are absolutely identical.

System users often prefer to think in terms of updatable files and want to use the same name for a file every time they update that file. The user presumes that the file exists in only one version, the latest version, even though the system may contain multiple versions or data objects of what the user regards as the same file. Users may not want to specify version numbers or, in the case of time-stamped files, a precise date and time when working with what they view as a single file.

The present invention resolves the conflict between files and data objects through a concept of partial naming. Partial naming does not precisely define the concept of a file. Different systems and different applications define their files differently. Partial naming allows a user to partition a global name into one part that identifies the file and another part that identifies the version. It is up to the user to determine which parts of the global name are included within the file name that he wishes to work with ordinarily.

The separation of the global name into user-critical (file name) components and non-critical (versioning) components is achieved by designating a matching attribute for each token. Each token in the global name must have either a MUST MATCH or NEED NOT MATCH attribute. Typically, tokens used for versioning information, such as date, time or version number tokens, have a NEED NOT MATCH attribute while tokens that the user wishes to use to identify the file have a MUST MATCH attribute. If only one version of a file exists, the MUST MATCH tokens alone are enough to identify it. If two or more versions of the same file exist, the MUST MATCH tokens for every version of the file are the same. Normal file services, such as the fetching or replacing of data objects, can only be performed with one data object at a time. An effective file service request must include additional matching information that uses NEED NOT MATCH tokens in the global name of the multiple data objects. The NEED NOT MATCH tokens are used as tie-breakers; that is, to select a single data object from a set of several such objects.

A token which is used for tie-breaking purposes is assigned an ORDERED attribute. An ORDERED token contains a tie-breaking value, such as a date or version number, that always increases with time. An ORDERED token usually also has a NEED NOT MATCH attribute so that the user may request the oldest or newest version of a file without having to know the precise token value.

In formulating a file service request, a user must specify the name of a file which is to be involved in the service request. In one embodiment, the requested file name (RF name) specified in the file service request includes actual or dummy values for each token position in the global name. That is, if the candidate global names discussed above have four token positions, the service request file name illustrated in Figure 2 also has four token positions 18, 20, 22 and 24. In addition to the actual or dummy token values, the user also specifies a set 26 of indicators. Each indicator in the set is associated with one of the token positions and provides information to the system on actions to be taken with respect to that token position during comparisons of corresponding tokens in an RF name and global names of candidate data objects retrieved from a catalog of candidate global names.

A user may "attach" a FIND indicator or an IGNORE indicator to a particular token position in the RF name speci fied in the request. The system responds to a FIND indicator for a particular token position by comparing the actual token values for that position in the specified or RF name and candidate global names being compared. If a candidate global name has a MUST MATCH attribute assigned to that position, the candidate data object may be removed from consideration if the compared token values are not the same, depending on the type of file service requested. If a data object is to be deleted, a particular data object is not considered a candidate if there is a MUST MATCH attribute and unequal token values. For retrieval services, a single data object found may be retrieved even if the token values are not the same. A user retrieving such a file can then make a final determination if that is the file he wanted.

If a user enters an IGNORE indicator for a particular token position, no comparison of corresponding token values is made. The actual value of tokens in a position denoted by an IGNORE indicator in the RF and candidate global names are immaterial for purposes of the selection process.

For ORDERED or tie-breaking token positions in global names, a user may enter a SELECT indicator as part of the service request. The SELECT indicator may be SELECT HIGH or SELECT LOW. If multiple data objects are identified when the system has completed processing specified FIND indicators, the system uses the SELECT indicators to break the tie among candidate data objects. If a user has entered a SELECT HIGH indicator for a particular token position, the system will select the candidate data object which has the highest or newest token value in that token position. The system will respond to a SELECT LOW indicator by selecting the data object having the lowest or oldest value in the indicated position.

For operations that destroy data, such as delete or replace, the matching indicators for tokens with the MUST MATCH attribute are not pertinent, a complete and precise match is always required. For the NEED NOT MATCH tokens, the matching indicators are always pertinent.

If partial name processing is to work properly, global names for data objects must be consistently constructed to have a significant token value in each token position. Figure 3 is a flow chart of a process which may be accessed by a user to create a unique global name for a data object without necessarily entering significant token values for every token position in the name. The name creation process uses a GENERATE indicator supplied by the user and a GENERABLE attribute already stored in the system. Initially, the user supplies either a significant token value or a GENERATE indicator (block 30) for each token position in the data object name. The system determines whether a GENERATE indicator is included (block 32) in the entered information. If no GENERATE indicator is entered, the system proceeds to store (block 34) the entered token values as the global name for the data object. The system also stores previously-defined attributes for the token positions with the token values in each catalog in which the global name is recorded.

If operation 32 indicates that the entered information includes a GENERATE indicator, the system identifies the appropriate token generating routine (block 36) by checking previously-defined attributes for the token position. The token generating routine might supply a time stamp and/or date stamp or an automatically-incremented version number. If operation 36 reveals that a token generation routine exists in the system for the token position identified by the GENERATE indicator, that routine is called and used to generate a significant token value (block 38). Generated and entered token values are combined to form the data object global name, which is stored in step 34.

If, in attempting to respond to a GENERATE indicator, operation 36 fails to find a previously-defined token generating routine, this is clearly an error condition since the system has no way of supplying the required token value. Under these conditions, an error report (block 40) is generated and returned to the user to allow the user to modify the entered file naming specification.

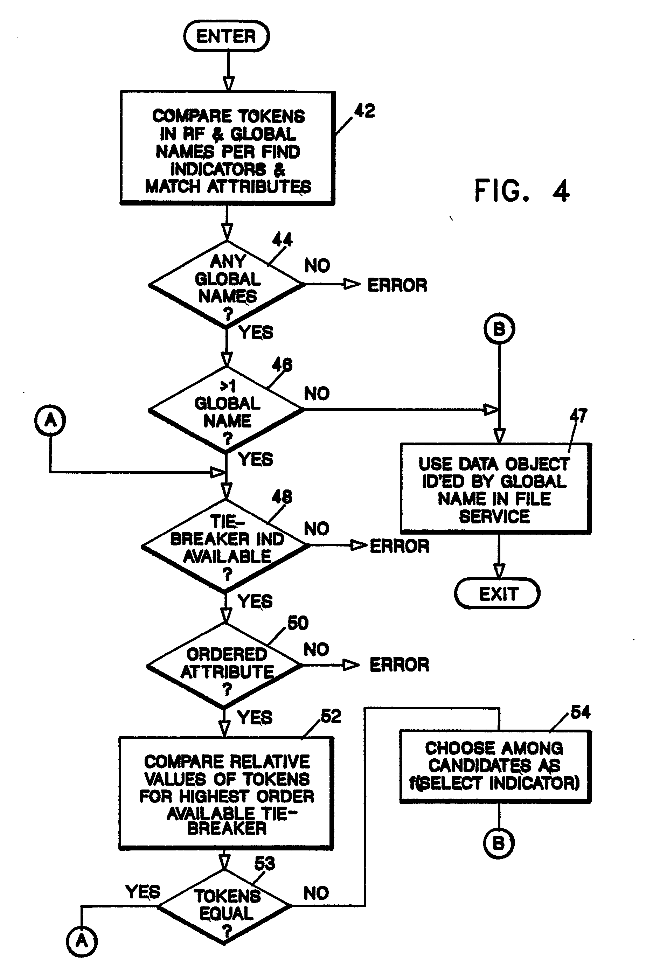

Figure 4 is a flow chart of the basic steps that are performed in processing a file deletion request using partial name processing. When the file service request, including the service request file or RF name and any user-supplied indicators, is received, the system accesses the catalog or catalogues identified in the service request to retrieve a listing of candidate data objects identified by candidate global names.

For each token position in the RF name having a FIND indicator, the system compares (block 42) the relative values of the tokens in corresponding positions in the RF and candidate global names. If a MUST MATCH attribute is assigned to that token position by the system, the data object remains on the candidate list only if the compared tokens have the same value. The data object remains on the candidate list where compared tokens have different values only if the user does not enter a FIND indicator for that token position and the system attribute for that token position is a NEED NOT MATCH attribute. At the conclusion of operation 42, the only names remaining on the candidate list will be those that have satisfied both the user-entered indicators and the system-stored attributes for all token positions in the names.

At the conclusion of operation 42, a check 44 is made to see whether any data objects remain on the candidate list. If none remain, meaning that no data object has been identified which satisfies the service request, an error condition exists. If one or more data object has been found, a check 46 is made as to whether more than one data objects have been identified. A negative response to check 46 means that a single data object has been found by the service request and the single data object is used (block 47) in carrying out the service request.

If more than one data object is found to satisfy the requirements of the FIND/IGNORE indicators and the MUST MATCH/NEED NOT MATCH attributes, the service request is checked (block 48) beginning with the highest order token, to determine whether it contains a SELECT or tie-breaker indicator assigned to a token position. If no SELECT indicator is found, this is an error condition since the system has no way of choosing among the multiple, apparently-equal global names. Assuming a SELECT indicator is found for at least one token position, the system must check (block 50) to see whether the stored attribute defines that token position as having an ORDERED or sequentially changing value. If check 50 shows that the SELECT indicator is applied to a token position having an UNORDERED attribute, this is an error condition because the token value will not necessarily change in any regular sequence. If check 50 had shown that the token position designated by the SELECT indicator has an ORDERED attribute, the system compares the relative values of tokens in corresponding positions in the data object names remaining in the candidate list (block 52). If the token values are the same (block 53), the tie remains unbroken and the RF name must again be checked (block 48) to see if a SELECT indicator applies to a lower order token position. The sequence of steps represented by blocks 48, 50, 52 and 53 are repeated until operation 48 indicates no further tie-breakers are available or until a negative response results from check 53. Once check 53 yields a negative response, the data object identified by the highest (for a SELECT HIGH indicator) or the lowest (for a SELECT LOW indicator) token value in the tie-breaking position is chosen (block 54) for use (block 47) in the file service request. If all tie-breakers are exhausted without reducing the number of candidates to one, operation 48 causes an error to be reported.

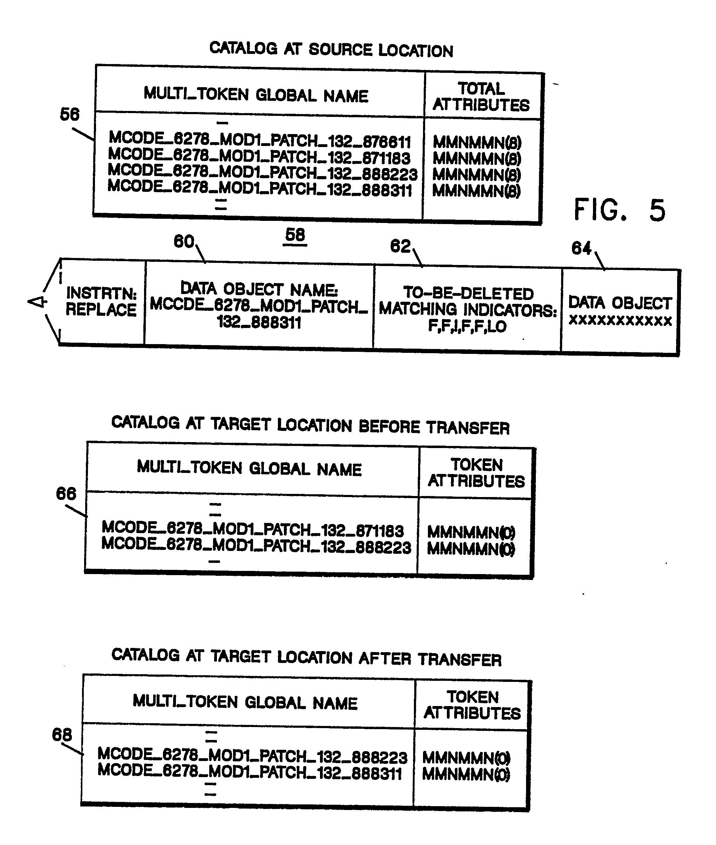

Figure 5 is an example of how partial name processing is used to replace a data object stored at a target location with a data object being shipped from a source location without requiring that user specify a significant token value for every token position in a global name. The figure shows a catalog 56 of data objects stored at the source location, the contents of a replace instruction 58, the contents 60 of the target location catalog before the replace instruction is executed and the contents 62 of the target location catalog after the replace instruction is executed.

The source location catalog indicates that several different versions of the same file are stored. The only difference between the global names for the stored data objects is in the sixth or right-most token position, which contains versioning information in the form of a date. Attributes assigned to each of the six token positions in each data object name are stored along with the names in the catalog 56. Inspection of the attributes indicates that M (MUST MATCH) attributes are assigned to token positions 1, 2, 4 and 5 while N (NEED NOT MATCH) attributes are assigned to token positions 3 and 6. An O (ORDERED) attribute also is assigned to token position 6 to indicate that position contains an ORDERED or sequentially changing value.

The replace instruction 58 contains the instruction itself, the global name 60 of the replacing data object, seen to be one of the data objects stored at the source location, a set 62 of indicators to be used in processing the replace instruction at the target location and the contents 64 of the data object. The set 62 of indicators includes F (FIND) indicators specifying that the value of tokens in the first, second, fourth and fifth token positions in the data object name 60 are to be compared to the values of tokens occupying corresponding token positions in each global name stored in the target location catalog. The I (IGNORE) indicator in the third token position in set 62 indicates that no comparisons need be made for tokens in this position. The LO indicator assigned to the sixth token position in name 60 indicates that the lowest token value in that position is to be chosen if multiple data objects remain on a candidate list after the analysis of tokens in token positions 1-5.

The initial catalog 60 at the target location contains two data objects having identical tokens in the first five token positions. The data object names differ only in the dates recorded in the sixth token position. It should be noted that the attributes for the data object names are stored along with the names. The attributes stored in the target location catalog are the same as those stored in the source location catalog. When instruction 58 is received at the target location, the matching operations required by the indicators in set 62 for the first five token positions will show that both of the catalogued data objects are candidates for the replace operation. The SELECT LOW indicator in the replace instruction causes the first data object on the list, the one having a "871103" value in the sixth token position to be selected for the replace operation. This data object is replaced by the data object accompanying the replace instruction. The target location catalog 62 following execution of the replace instruction shows that the received data object has replaced the oldest data object formerly listed in the target location catalog.

While there has been described what is considered to be a preferred embodiment of the invention, variations and modifications in the invention will occur to those skilled in the art once they are made aware of the basic inventive concepts. Therefore, it is intended that the appended claims shall be construed to include the preferred embodiment and all such variations and modifications as fall within the true spirit and scope of the invention.

## Claims

1. Method of performing file services in a data processing system wherein data objects are identified by global names consisting of concatenated tokens, wherein at least one requested file name (RF name) which may be a partial global name, is included in any file service request and wherein the system contains at least one catalog of data objects which are candidates for involvement in the service request, each catalogued data object being identified by a global name; said method comprising the steps of:

storing each global name in the catalog along with one or more attributes for each token position in the name, each said attribute indicating a property of any token occupying that token position in the catalogued global name,

assigning at least one indicator (26) to each token position in the RF name at the time the request is generated, each of said indicators indicating a specific operation which is to be performed with respect to that token position in any comparative analysis of the RF name and catalogued global names,

analyzing the RF name relative to one or more catalogued global names on a token by token basis,

selecting a data object identified by a catalogued global name in which each token, when compared to the corresponding token of the RF name, satisfies each attribute and indicator applicable to the position in which the compared tokens appear, and performing the requested file service using the selected data object.

2. The method as defined in claim 1 wherein an attribute assignable to a token position defines whether two tokens in corresponding positions in analyzed RF and catalogued global names must match before the data object identified by the global name may be considered for selection.

3. The method as defined in claim 1 wherein an attribute assignable to a token position defines whether the token has a ordered value which is arithmetically related to the value of tokens in the same position in other catalogued global names.

4. The method as defined in claim 1, 2 or 3 wherein an indicator assignable to a token position in an RF name indicates whether the value of a token in that position must be compared to the value of a token in the corresponding position of a catalogued global name when analyzing the names.

5. The method as defined in claim 4 wherein one of the indicators assignable to a token position in an RF name indicates whether the data object having the highest token value in that position should be selected where all other attributes and indicators for the analyzed RF and catalogued global names are satisfied.

6. Apparatus for selecting a data object for use in performing a file service request in a data processing system wherein data objects are identified by global names consisting of concatenated tokens, wherein at least one file name (RF name) is included in any file service request and wherein the system contains data objects which are candidates for involvement in the service request, each such data object being identified by a global name, and a partial global name being specified in the request; said apparatus comprising:

means for storing each global name in one or more catalogs along with one or more attributes for each token position in the name, each stored attribute indicating a property of the token occupying that token position in the stored global name;

means for receiving service requests having an RF name and at least one indicator for each token position in the RF name, each of said indicators indicating a specific operation which is to be performed with respect to that token position in any comparative analysis of the RF name and stored global names;

means for analyzing the RF name relative to one or more stored global names on a token by token basis; and

means for selecting a data object identified by a stored global name in which each token, when compared to the corresponding token of the RF name, satisfies each attribute and indicator applicable to the position in which the compared tokens appear.

7. The apparatus as defined in claim 6 wherein said analyzing means further includes means responsive to a predetermined attribute for eliminating from consideration any data object identified by a stored global name where the token in the position to which that attribute is assigned does not match the corresponding token in said RF name.

8. The apparatus as defined in claim 7 wherein said analyzing means further includes means responsive to a predetermined indicator for bypassing any comparison between a token in that position in said RF name and the token in the corresponding position of a stored global name.

FIG. 1

| 10 | 12 | 14 | 16 |
|---|---|---|---|
| TOKEN 1. | TOKEN 2. | TOKEN 3. | TOKEN 4 |

(A1, A2, A3/A4, A5)

| 18 | 20 | 22 | 24 | 26 |
|---|---|---|---|---|
| TOKEN 1. | TOKEN 2. | TOKEN 3. | TOKEN 4 | (I1, I2, I3, I4) |

FIG. 2

FIG. 3

ENTER

30 ENTER TOKEN OR GENERATE IND. FOR EACH POSITION

32 GENERATE IND. ENTERED ? — NO

YES

36 TOKEN GENERATION ROUTINE AVAIL ?

NO

40 GENERATE ERROR RPT.

EXIT

YES

38 GENERATE TOKEN

34 STORE ENTERED/ GENERATED TOKENS AS OF NAME W/ SYSTEM DEFINED ATTRIBUTES

EXIT

IBM - RA 9 89 005

ENTER

COMPARE TOKENS
IN RF & GLOBAL
NAMES PER FIND
INDICATORS &
MATCH ATTRIBUTES  42

ANY
GLOBAL
NAMES
?  44  NO → ERROR

YES

B

>1
GLOBAL
NAME
?  46  NO →

A

YES

USE DATA OBJECT
ID'ED BY GLOBAL
NAME IN FILE
SERVICE  47

TIE-
BREAKER IND
AVAILABLE
?  48  NO → ERROR

YES

EXIT

ORDERED
ATTRIBUTE
?  50  NO → ERROR

YES

COMPARE RELATIVE
VALUES OF TOKENS
FOR HIGHEST ORDER
AVAILABLE TIE-
BREAKER  52

CHOOSE AMONG
CANDIDATES AS
f(SELECT INDICATOR)  54

B

YES ← TOKENS
EQUAL
?  53  NO →

A

FIG. 4

IBM - RA 9 89 005

CATALOG AT SOURCE LOCATION

| MULTI_TOKEN GLOBAL NAME | TOTAL ATTRIBUTES |
|---|---|
| $=$ MCODE_6278_MOD1_PATCH_132_876611 MCODE_6278_MOD1_PATCH_132_871183 MCODE_6278_MOD1_PATCH_132_888223 MCODE_6278_MOD1_PATCH_132_888311 $=$ | MMNMMN(8) MMNMMN(8) MMNMMN(8) MMNMMN(8) |

56

## FIG. 5

58

| INSTRTN: REPLACE | DATA OBJECT NAME: MCCDE_6278_MOD1_PATCH_ 132_888311 | TO−BE−DELETED MATCHING INDICATORS: F,F,I,F,F,LO | DATA OBJECT xxxxxxxxxxx |
|---|---|---|---|

60  62  64

CATALOG AT TARGET LOCATION BEFORE TRANSFER

| MULTI_TOKEN GLOBAL NAME | TOKEN ATTRIBUTES |
|---|---|
| $=$ MCODE_6278_MOD1_PATCH_132_871183 MCODE_6278_MOD1_PATCH_132_888223 $=$ | MMNMMN(0) MMNMMN(0) |

66

CATALOG AT TARGET LOCATION AFTER TRANSFER

| MULTI_TOKEN GLOBAL NAME | TOKEN ATTRIBUTES |
|---|---|
| $=$ MCODE_6278_MOD1_PATCH_132_888223 MCODE_6278_MOD1_PATCH_132_888311 $=$ | MMNMMN(0) MMNMMN(0) |

68

IBM − RA 9 89 005